(19) Europäisches Patentamt
European Patent Office
Office européen des brevets

(11) **EP 4 574 459 A1**

(12) **EUROPEAN PATENT APPLICATION**

(43) Date of publication:
**25.06.2025 Bulletin 2025/26**

(21) Application number: **24214377.4**

(22) Date of filing: **21.11.2024**

(51) International Patent Classification (IPC):
***B60C 11/00*** *(2006.01)*      ***B60C 11/03*** *(2006.01)*

(52) Cooperative Patent Classification (CPC):
**B60C 11/005; B60C 11/0302; B60C 11/0304;
B60C 11/0306; B60C 11/0332;** B60C 2011/0025;
B60C 2011/0033

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 JP 2023215581**

(71) Applicant: **Sumitomo Rubber Industries, Ltd.
Kobe-shi, Hyogo 651-0072 (JP)**

(72) Inventors:
• **Hagihara, Takashi**
  **Kobe-shi, Hyogo, 651-0072 (JP)**
• **Ikeda, Ryota**
  **Kobe-shi, Hyogo, 651-0072 (JP)**
• **Tamai, Junya**
  **Kobe-shi, Hyogo, 651-0072 (JP)**
• **Furukoshi, Arata**
  **Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)      A tire 2 includes a tread 4 including a plurality of layers 48 including a cap layer 50, an intermediate layer 52, and a base layer 54. A loss tangent at 30°C of the intermediate layer 52 is lower than a loss tangent at 30°C of the cap layer 50. A loss tangent at 30°C of the base layer 54 is lower than the loss tangent at 30°C of the intermediate layer 52. The tread 4 includes a first tread 60 and a second tread 62. A ratio of a thickness of the cap layer 50 in the second tread 62 to a thickness of the tread 4 is not less than 5% and not greater than 25%. A ratio of the thickness of the cap layer 50 in the first tread 60 to the thickness of the tread 4 is not less than 35% and not greater than 55%.

EP 4 574 459 A1

**Description**

BACKGROUND OF THE INVENTION

Field of the Invention

The present invention relates to a tire. Specifically, the present invention relates to a tire that is mounted to a passenger car.

Background Art

The heat generation properties of rubber influence rolling resistance and grip performance. When a rubber that has low heat generation properties is used for a tread, a tire having low rolling resistance is obtained. The rubber that has low heat generation properties is inferior to a rubber that has high heat generation properties, in terms of grip force. Therefore, when the rubber that has low heat generation properties is used for the tread, for example, grip performance on a wet road surface (hereinafter also referred to as wet performance) is decreased.

The tread is usually composed of two layers aligned in the radial direction. The outermost layer is a cap layer, and the innermost layer is a base layer. The cap layer is formed from a rubber for which wet performance is taken into consideration and which has high heat generation properties (hereinafter referred to as cap rubber). The base layer is formed from a rubber for which rolling resistance is taken into consideration and which has low heat generation properties (hereinafter referred to as base rubber).

From the viewpoint of consideration for the environment, further reduction of rolling resistance is required, and a tread formed from three types of rubbers including, in addition to a cap rubber and a base rubber, a rubber that generates less heat than the cap rubber and generates more heat than the base rubber (hereinafter referred to as intermediate rubber), has been developed.

For example, in Japanese Laid-Open Patent Publication No. 2018-2008, the adoption of a tread having a three-layer structure in which a cap layer formed from a cap rubber, an intermediate layer formed from an intermediate rubber, and a base layer formed from a base rubber are aligned in the radial direction, is considered.

The adoption of the intermediate rubber reduces the heat generation properties of the entire tread. Therefore, a tire can reduce rolling resistance. However, the grip force of the intermediate rubber is inferior to that of the cap rubber. Therefore, when a tread is composed of a cap rubber, an intermediate rubber, and a base rubber, there is a concern that wet performance may be decreased.

An object of the present invention is to provide a tire that can achieve reduction of rolling resistance while suppressing a decrease in wet performance.

SUMMARY OF THE INVENTION

A tire according to one aspect of the present invention includes a pair of beads, a carcass extending on and between the pair of beads, a tread located radially outward of the carcass and configured to come into contact with a road surface, and a belt located between the carcass and the tread. The tread includes a plurality of layers aligned in a radial direction. The plurality of layers include a cap layer located on an outermost side, a base layer located on an innermost side, and an intermediate layer located between the cap layer and the base layer. A loss tangent at 30°C of the intermediate layer is lower than a loss tangent at 30°C of the cap layer. A loss tangent at 30°C of the base layer is lower than the loss tangent at 30°C of the intermediate layer. The tread includes a first tread located on an equator plane and a second tread located axially outward of the first tread. A ratio of a thickness of the cap layer in the second tread to a thickness of the tread is not less than 5% and not greater than 25%. A ratio of the thickness of the cap layer in the first tread to the thickness of the tread is not less than 35% and not greater than 55%.

According to the present invention, a tire that can achieve reduction of rolling resistance while suppressing a decrease in wet performance, is obtained.

BRIEF DESCRIPTION OF THE DRAWINGS

FIG. 1 is a cross-sectional view showing a part of a tire according to one embodiment of the present invention;
FIG. 2 is a development view showing a part of a tread pattern;
FIG. 3 is an enlarged cross-sectional view showing a part of a tread portion;
FIG. 4 is a cross-sectional view showing the configuration of a tread;

FIG. 5 is a cross-sectional view showing a modification of the configuration of the tread;
FIG. 6 is a schematic diagram showing a ground-contact surface shape of the tire;
FIG. 7 is a schematic diagram showing a ground-contact surface shape of the tire; and
FIG. 8 is a development view of a modification of the tread pattern.

DETAILED DESCRIPTION

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a load index (LI) is, for example, an index that is specified in the JATMA standard and that represents a maximum mass allowed to be applied to the tire under specified conditions, that is, a maximum load capacity, as an index number.

In the present invention, a rubber composition is a material obtained by mixing a base rubber and chemicals in a kneading machine such as a Banbury mixer. The base rubber of the rubber composition is not crosslinked. A crosslinked rubber is a molded product obtained by pressurizing and heating the rubber composition. The crosslinked rubber is a crosslinked product of the rubber composition. The base rubber of the crosslinked rubber is crosslinked. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, a loss tangent (tan $\delta$) of a component formed from a crosslinked rubber, of the components included in the tire, is measured using a viscoelasticity spectrometer according to the standards of JIS K6394. The measurement conditions are as follows.

Initial strain = 10%
Dynamic strain = $\pm$1%
Frequency = 10 Hz
Mode = stretch mode
Temperature = 30°C

In this measurement, a test piece (40 mm long × 4 mm wide × 1 mm thick) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the loss tangent is represented as a loss tangent at 30°C.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

Each axially outer portion of the tread portion is also referred to as shoulder portion. A portion between the right and left shoulder portions is also referred to as crown portion. The crown portion intersects the equator plane of the tire.

[Findings on Which Present Invention Is Based]

Grooves are formed on a tread in consideration of running on a wet road surface. The tread becomes worn. Accordingly, the volume of the grooves decreases. Therefore, when a tire in which the wear of a tread has progressed runs on a wet road surface, mild hydroplaning occurs. The heat generation properties of rubber influences the grip performance of a tire. However, even with a rubber that has high heat generation properties, if mild hydroplaning occurs, the contribution of the rubber to exhibiting grip performance decreases. Therefore, the thickness of a cap layer is adjusted such that the cap layer remains until a state where mild hydroplaning occurs is brought about. Even if the tread is formed with a three-layer structure, the thickness of the cap layer has to be ensured, and it is difficult to further reduce rolling resistance.

Therefore, the present inventors have conducted a thorough study for technology capable of achieving reduction of rolling resistance while suppressing a decrease in wet performance of a tire, not only by adjusting the thickness of each layer aligned in the radial direction but also considering a thickness distribution in the axial direction, and thus have completed the invention described below.

[Details of Embodiment of Present Invention]

Hereinafter, the present invention will be described in detail based on a preferred embodiment with appropriate reference to the drawings.

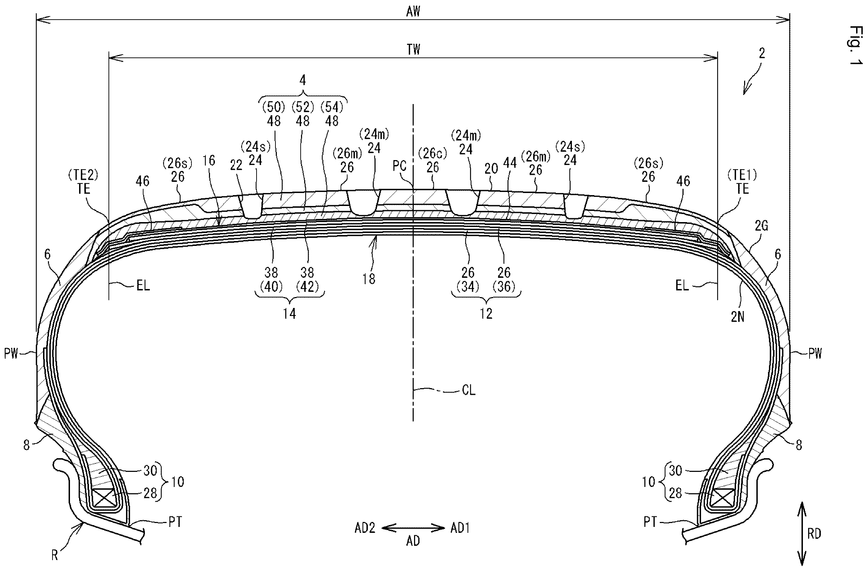

FIG. 1 shows a part of a tire 2 according to one embodiment of the present invention. The tire 2 is a pneumatic tire for a passenger car.

FIG. 1 shows a part of a cross-section, of the tire 2, along a plane including the rotation axis (not shown) of the tire 2. The cross-section shown in FIG. 1 is also referred to as meridian cross-section. A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the surface of the drawing sheet of FIG. 1 is the circumferential direction of the tire 2.

In FIG. 1, an alternate long and short dash line CL extending in the radial direction represents the equator plane of the tire 2.

FIG. 1 shows the tire 2 fitted on a rim R. The space between the tire 2 and the rim R is filled with air, for example, to adjust the internal pressure of the tire 2. The rim R is a standardized rim.

In FIG. 1, a position indicated by reference character PC is the point of intersection of an outer surface 2G of the tire 2 (specifically, a tread surface described later) and the equator plane CL. The point of intersection PC is the equator of the tire 2. In the case where a groove is located on the equator plane CL, the equator PC is specified on the basis of a virtual outer surface (virtual tread surface described later) obtained on the assumption that no groove is provided thereon. The equator PC is a radially outer end of the tire 2.

In FIG. 1, a position indicated by each reference character PW is an axially outer end (hereinafter referred to as outer end PW) of the tire 2. In the case where decorations such as patterns and letters are present on the outer surface 2G, the outer end PW is specified on the basis of a virtual outer surface obtained on the assumption that the decorations are not present thereon.

In FIG. 1, a length indicated by a double-headed arrow AW is the maximum width of the tire 2. The maximum width AW is represented as the distance in the axial direction from a first outer end PW to a second outer end PW. Each outer end PW is a position where the maximum width AW is indicated, and is also referred to as maximum width position. The maximum width AW obtained in the standardized state is the cross-sectional width (see JATMA or the like) of the tire 2.

The tire 2 includes a tread 4, a pair of sidewalls 6, a pair of clinches 8, a pair of beads 10, a carcass 12, a belt 14, a band 16, and an inner liner 18 as components thereof.

The tread 4 is located radially outward of the carcass 12. The tread 4 comes into contact with a road surface at a tread surface 20 thereof. The tread 4 has the tread surface 20 which comes into contact with a road surface. The tread surface 20 is a part of the outer surface 2G of the tire 2. The tread surface 20 includes the equator PC.

Grooves 22 are formed on the tread 4. Accordingly, a tread pattern is formed. The grooves 22 include a plurality of circumferential grooves 24 extending continuously in the circumferential direction.

The tread 4 has the tread pattern including the plurality of circumferential grooves 24. The tread pattern of the tire 2 shown in FIG. 1 includes four circumferential grooves 24 aligned in the axial direction. The groove depth of each circumferential groove 24 is not less than 5.5 mm and not greater than 8.5 mm.

Among the four circumferential grooves 24, two circumferential grooves 24 each located on the outermost side in the axial direction are shoulder circumferential grooves 24s. Two circumferential grooves 24 located axially inward of the shoulder circumferential grooves 24s are middle circumferential grooves 24m. The tread pattern of the tire 2 includes the pair of shoulder circumferential grooves 24s and the pair of middle circumferential grooves 24m located between the pair of shoulder circumferential grooves 24s.

The four circumferential grooves 24 form five land portions 26 in the tread 4. The edges of the land portions 26 are also the edges of the circumferential grooves 24.

Among the five land portions 26 aligned in the axial direction, two land portions 26 each located on the outermost side are shoulder land portions 26s. Two land portions 26 located axially inward of the shoulder land portions 26s are middle land portions 26m. A land portion 26 located between the two middle land portions 26m is a center land portion 26c.

The center land portion 26c includes the equator PC. The five land portions 26 formed in the tread 4 include the center land portion 26c located on the equator plane CL, the pair of middle land portions 26m located axially outward of the center land portion 26c, and the pair of shoulder land portions 26s located axially outward of the middle land portions 26m.

Each sidewall 6 is connected to the tread 4. The sidewall 6 is located radially inward of the tread 4. The sidewall 6 is located axially outward of the carcass 12. The sidewall 6 is formed from a crosslinked rubber for which cut resistance is taken into consideration.

Each clinch 8 is located radially inward of the sidewall 6. The clinch 8 comes into contact with the rim R. The clinch 8 is formed from a crosslinked rubber for which wear resistance is taken into consideration.

Each bead 10 is located axially inward of the clinch 8. The bead 10 is located radially inward of the sidewall 6.

The bead 10 includes a core 28 and an apex 30. The core 28 extends in the circumferential direction. The core 28 includes a steel wire which is not shown. The apex 30 is located radially outward of the core 28. The apex 30 is formed from a crosslinked rubber that has high stiffness.

The carcass 12 is located inward of the tread 4, the pair of sidewalls 6, and the pair of clinches 8. The carcass 12 extends on and between the pair of beads 10.

The carcass 12 includes at least one carcass ply 32. The carcass 12 of the tire 2 is composed of two carcass plies 32. On the radially inner side of the tread 4, the carcass ply 32 located on the inner side is a first carcass ply 34, and the carcass ply 32 located outward of the first carcass ply 34 is a second carcass ply 36.

As shown in FIG. 1, the two carcass plies 32 are turned up from the inner side to the outer side in the axial direction at the respective beads 10.

Each carcass ply 32 includes a large number of carcass cords aligned with each other, which are not shown. These carcass cords intersect the equator plane CL. The carcass 12 of the tire 2 has a radial structure. In the tire 2, a cord formed from an organic fiber is used as each carcass cord. Examples of the organic fiber include nylon fibers, rayon fibers, polyester fibers, and aramid fibers.

The belt 14 is located radially inward of the tread 4. The belt 14 is stacked on the carcass 12. The belt 14 is located between the carcass 12 and the tread 4. The above-described equator plane CL intersects the belt 14 at the center of the width in the axial direction of the belt 14.

The width in the axial direction of the belt 14 is not less than 65% and not greater than 85% of the cross-sectional width AW of the tire 2.

The belt 14 includes a plurality of belt plies 38 aligned in the radial direction. The plurality of belt plies 38 include an inner belt ply 40 located on the innermost side and an outer belt ply 42 located on the outermost side. The belt 14 of the tire 2 is composed of two belt plies 38. Specifically, the belt 14 is composed of the inner belt ply 40 and the outer belt ply 42.

The inner belt ply 40 is stacked on the carcass 12 on the radially inner side of the tread 4. The outer belt ply 42 is stacked on the inner belt ply 40.

As shown in FIG. 1, each end of the outer belt ply 42 is located axially inward of an end of the inner belt ply 40. The outer belt ply 42 is narrower than the inner belt ply 40. The length from the end of the outer belt ply 42 to the end of the inner belt ply 40 is not less than 3 mm and not greater than 10 mm. The above-described width in the axial direction of the belt 14 is represented as the width in the axial direction of the wider inner belt ply 40.

Each of the plurality of belt plies 38 included in the belt 14 includes a large number of belt cords aligned with each other, which are not shown. Each belt cord is inclined with respect to the equator plane CL. The material of the belt cord is steel.

The band 16 is stacked on the belt 14 on the inner side of the tread 4. Each end of the band 16 is located axially outward of an end of the belt 14. The length from the end of the belt 14 to the end of the band 16 is not less than 3 mm and not greater than 7 mm.

The band 16 of the tire 2 includes a full band 44 and a pair of edge bands 46.

The full band 44 covers the entire belt 14 from the outer side in the radial direction. The above-described equator plane CL intersects the full band 44 at the center of the width in the axial direction of the full band 44.

The pair of edge bands 46 are placed so as to be spaced apart from each other in the axial direction with the equator plane CL interposed therebetween. Each edge band 46 covers an end of the full band 44 from the outer side in the radial direction.

The band 16 may be composed of only the full band 44, or may be composed of only the pair of edge bands 46.

The band 16 includes a helically wound band cord which is not shown. In the band 16, the band cord extends substantially in the circumferential direction. Specifically, an angle of the band cord with respect to the circumferential direction is not greater than 5°. The band 16 has a jointless structure. A cord formed from an organic fiber is used as the band cord. Examples of the organic fiber include nylon fibers, rayon fibers, polyester fibers, and aramid fibers.

The band cord included in the full band 44 and the band cord included in each edge band 46 are the same. The band cord in the full band 44 and the band cord in each edge band 46 may be different.

The inner liner 18 is located inward of the carcass 12. The inner liner 18 forms an inner surface 2N of the tire 2. The inner liner 18 is formed from a crosslinked rubber that has an excellent air blocking property. The inner liner 18 maintains the internal pressure of the tire 2.

In FIG. 1, each solid line EL is a straight line that passes through the end of the belt 14 and extends in the radial direction. A position indicated by each reference character TE is the point of intersection of the straight line EL and the outer surface 2G of the tire 2. The point of intersection TE is a position on the outer surface of the tread 4 corresponding to the end of the belt 14. In the present invention, the position TE is a reference end that defines a width TW of the tread 4. The width TW of the tread 4 is represented as the distance in the axial direction from one reference end TE to the other reference end TE.

In the present invention, of the two reference ends TE, one reference end TE located on the inner side in the width direction of a vehicle (not shown) when the tire 2 is mounted on the vehicle is a first reference end TE1, and the other reference end TE is a second reference end TE2. In the cross-section of the tire 2 shown in FIG. 1, the reference end TE located on an arrow AD1 side is referred to as first reference end TE1, and the reference end TE located on an arrow AD2 side is referred to as second reference end TE2.

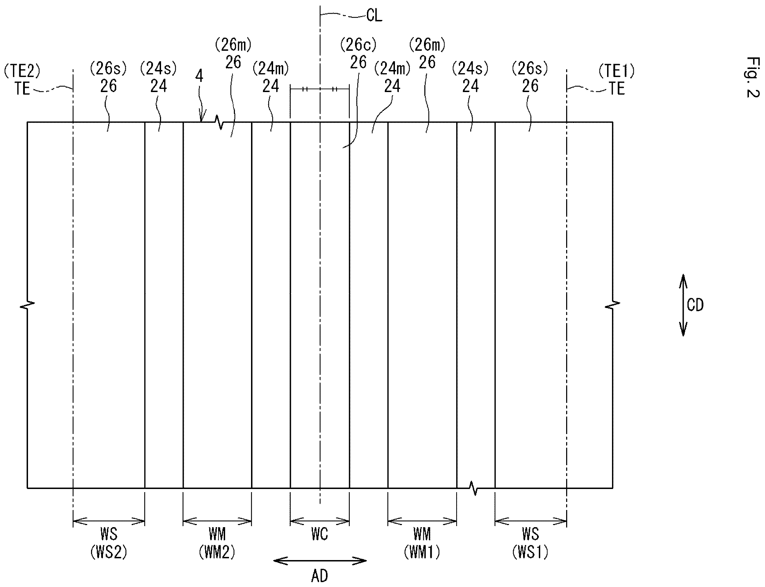

FIG. 2 is a development view showing a part of the tread pattern of the tire 2. In FIG. 2, a direction indicated by a double-headed arrow AD is the axial direction of the tire 2. A direction indicated by a double-headed arrow CD is the circumferential direction of the tire 2. In FIG. 2, for convenience of description, only the four circumferential grooves 24 are shown as the grooves 22 which form the tread pattern.

In the tire 2, the four circumferential grooves 24 are arranged symmetrically with respect to the equator plane CL. Therefore, the five land portions 26 are also arranged symmetrically with respect to the equator plane CL.

In FIG. 2, a length indicated by a double-headed arrow WC is the width of the center land portion 26c. The width WC is represented as the distance in the axial direction from one edge to the other edge of the center land portion 26c. The width WC is not less than 11% and not greater than 13% of a ground-contact width CW of a standard ground-contact surface described later.

As shown in FIG. 2, the equator plane CL intersects the center land portion 26c at the center of the width WC of the center land portion 26c.

In FIG. 2, a length indicated by each double-headed arrow WM is the width of the middle land portion 26m. The width WM is represented as the distance in the axial direction from one edge to the other edge of the middle land portion 26m. In the tread pattern shown in FIG. 2, a width WM1 of the middle land portion 26m on the first reference end TE1 side and a width WM2 of the middle land portion 26m on the second reference end TE2 side are the same. The width WM of each middle land portion 26m is not less than 120% and not greater than 130% of the width WC of the center land portion 26c.

In FIG. 2, a length indicated by each double-headed arrow WS is the width of the shoulder land portion 26s. The width WS is represented as the distance in the axial direction from the inner edge of the shoulder land portion 26s to the reference end TE of the tread 4. In the tread pattern shown in FIG. 2, a width WS1 of the shoulder land portion 26s on the first reference end TE1 side and a width WS2 of the shoulder land portion 26s on the second reference end TE2 side are the same. The width WS of each shoulder land portion 26s is not less than 135% and not greater than 145% of the width WC of the center land portion 26c.

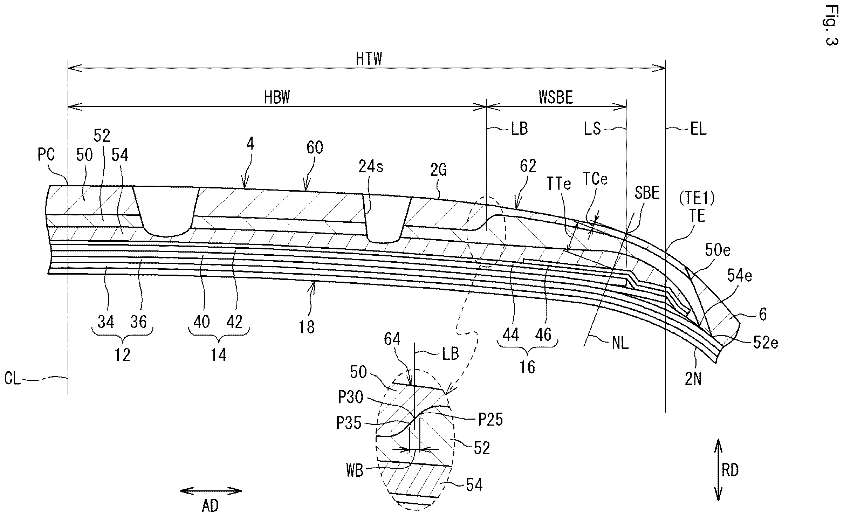

FIG. 3 shows a part of a tread portion of the tire 2 shown in FIG. 1. FIG. 3 shows the tread portion on the first reference end TE1 side.

The tread 4 of the tire 2 includes a plurality of layers 48 aligned in the radial direction. Each layer 48 is formed from a crosslinked rubber.

The plurality of layers 48 include a cap layer 50, an intermediate layer 52, and a base layer 54. The cap layer 50 is located on the outermost side. The base layer 54 is located on the innermost side. The intermediate layer 52 is located between the cap layer 50 and the base layer 54. The tread 4 of the tire 2 includes the cap layer 50 located on the outermost side, the base layer 54 located on the innermost side, and the intermediate layer 52 located between the cap layer 50 and the base layer 54. The tread 4 has a three-layer structure.

The cap layer 50 comes into contact with a road surface. An end 50e of the cap layer 50 is located axially inward of an end 52e of the intermediate layer 52. Most of the intermediate layer 52 is covered with the cap layer 50. In a new tire 2, the intermediate layer 52 is not exposed. The end 50e of the cap layer 50 may coincide with the end 52e of the intermediate layer 52. When the cap layer 50 is worn away, the intermediate layer 52 comes into contact with a road surface. Contact with a road surface is taken into consideration for the intermediate layer 52. The position of an end 54e of the base layer 54 coincides with the position of the end 52e of the intermediate layer 52 in the axial direction, or the end 54e of the base layer 54 is located axially inward of the end 52e of the intermediate layer 52. The entirety of the base layer 54 is covered with the intermediate layer 52. The base layer 54 does not come into contact with a road surface. Contact with a road surface is not taken into consideration for the base layer 54.

In the tire 2, a loss tangent LTm at 30°C of the intermediate layer 52 is lower than a loss tangent LTc at 30°C of the cap layer 50. A loss tangent LTb at 30°C of the base layer 54 is lower than the loss tangent LTm at 30°C of the intermediate layer 52. The cap layer 50, the base layer 54, and the intermediate layer 52 are formed from crosslinked rubbers having different heat generation properties, respectively. The cap layer 50 is most likely to generate heat, and the base layer 54 is least likely to generate heat. The intermediate layer 52 has heat generation properties between that of the cap layer 50 and that of the base layer 54.

The cap layer 50 having the high loss tangent LTc provides a high grip force. The cap layer 50 can contribute to improvement of wet performance. The base layer 54 having the low loss tangent LTb is less likely to generate heat. The base layer 54 can contribute to reduction of rolling resistance. The intermediate layer 52 has the intermediate loss tangent LTm between the loss tangent LTc and the loss tangent LTb. In the case where importance is placed on wet performance, the loss tangent LTm of the intermediate layer 52 is set to a loss tangent close to the loss tangent LTc of the cap layer 50. In the case where importance is placed on rolling resistance, the loss tangent LTm of the intermediate layer 52 is set to a loss tangent close to the loss tangent LTb of the base layer 54.

In the present invention, the thicknesses of the tread 4 and each layer 48 included in the tread 4 are measured along a normal line of the outer surface 2G of the tire 2. The ratio of the thickness of each layer 48 to the thickness of the tread 4 is represented on the basis of the thicknesses measured along the same normal line.

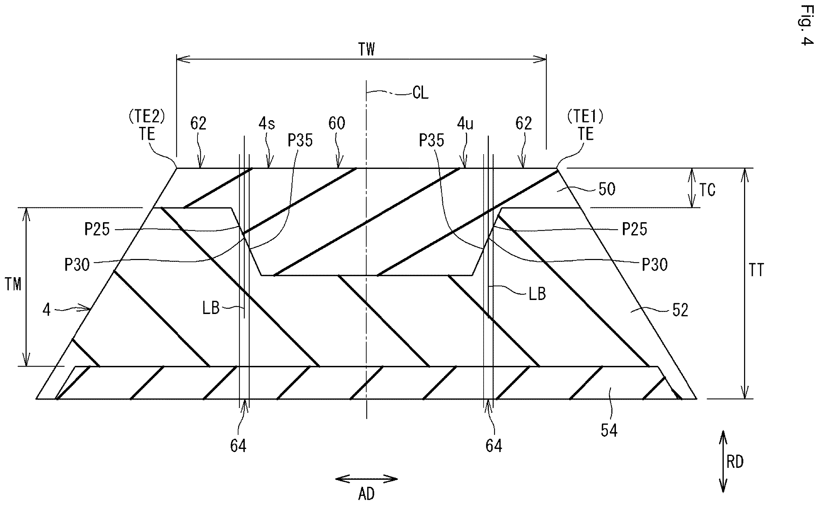

FIG. 4 is a cross-sectional view of the tread 4 of the tire 2. FIG. 4 schematically shows the configuration of the tread 4 shown in FIG. 1.

The first reference end TE1 side of the tread 4 with respect to the equator plane CL is also referred to as inside tread 4u, and the second reference end TE2 side of the tread 4 with respect to the equator plane CL is also referred to as outside tread 4s. The tread 4 includes the inside tread 4u located on the first reference end TE1 side with respect to the equator plane CL, and the outside tread 4s located on the second reference end TE2 side with respect to the equator plane CL.

As shown in FIG. 4, the tread 4 of the tire 2 has a layer structure that is symmetrical with respect to the equator plane CL.

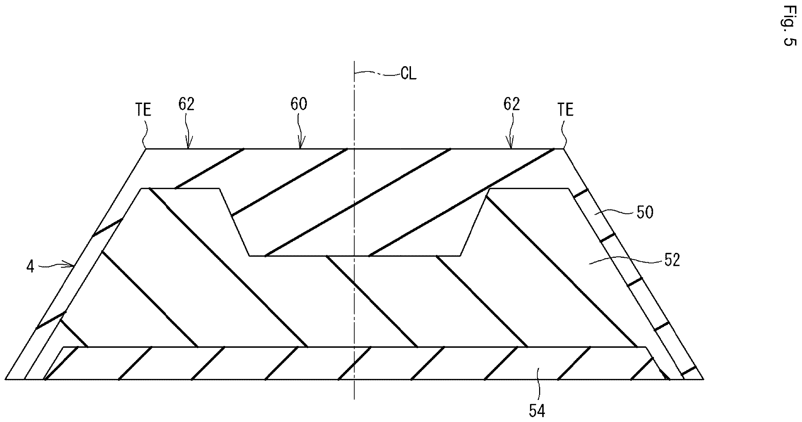

FIG. 5 shows a modification of the tread 4 shown in FIG. 4. As shown in FIG. 5, the tread 4 may be formed such that the cap layer 50 covers the entire intermediate layer 52. In the modification shown in FIG. 5 as well, the tread 4 has a layer structure that is symmetrical with respect to the equator plane CL.

The tread 4 of the tire 2 is divided into a first tread 60 and a second tread 62 by a thickness TC of the cap layer 50. The first tread 60 is a portion where the cap layer 50 is thick, and the second tread 62 is a portion where the cap layer 50 is thin. Specifically, the first tread 60 is a portion where the thickness TC of the cap layer 50 is in a range of not less than 35% and not greater than 55% of the thickness TT of the tread 4. The second tread 62 is a portion where the thickness TC of the cap layer 50 is in a range of not less than 5% and not greater than 25% of the thickness TT of the tread 4.

The ratio TC/TT of the thickness TC of the cap layer 50 in the first tread 60 to the thickness TT of the tread 4 is also referred to as ratio RC1. The ratio TM/TT of a thickness TM of the intermediate layer 52 in the first tread 60 to the thickness TT of the tread 4 is also referred to as ratio RM1. The ratio of the thickness of the base layer 54 in the first tread 60 to the thickness TT of the tread 4 is also referred to as ratio RB1.

The ratio TC/TT of the thickness TC of the cap layer 50 in the second tread 62 to the thickness TT of the tread 4 is also referred to as ratio RC2. The ratio TM/TT of the thickness TM of the intermediate layer 52 in the second tread 62 to the thickness TT of the tread 4 is also referred to as ratio RM2. The ratio of the thickness of the base layer 54 in the second tread 62 to the thickness TT of the tread 4 is also referred to as ratio RB2.

In FIG. 4, a position indicated by each reference character P25 is a position at which the thickness TC of the cap layer 50 is 25% of the thickness TT of the tread 4. A portion on the axially outer side of the position P25 is the second tread 62. A position indicated by each reference character P35 is a position at which the thickness TC of the cap layer 50 is 35% of the thickness TT of the tread 4. A portion on the axially inner side of the position P35 is the first tread 60. The first tread 60 of the tire 2 intersects the equator plane CL.

When the tire 2 comes into contact with a road surface, each shoulder portion of the tread portion becomes significantly deformed. In the shoulder portion, large compressive strain is generated near the ground-contact end. Compressive strain is a factor that increases rolling resistance.

The tread 4 of the tire 2 includes the first tread 60 and a pair of such second treads 62. The first tread 60 is located on the equator plane CL, and each second tread 62 is located axially outward of the first tread 60.

As described above, the ratio (TC/TT) of the thickness TC of the cap layer 50 in the second tread 62 to the thickness TT of the tread 4 is not less than 5% and not greater than 25%, and the ratio (TC/TT) of the thickness TC of the cap layer 50 in the first tread 60 to the thickness TT of the tread 4 is not less than 35% and not greater than 55%.

The cap layer 50 in the second tread 62 is thin. In the second tread 62, a thicker intermediate layer 52 can be formed than in the first tread 60. The second tread 62 generates less heat than the first tread 60. As described above, the second tread 62 is located axially outward of the first tread 60. The second tread 62 can contribute to reduction of energy loss caused by compressive strain in the shoulder portion. The tire 2 can achieve reduction of rolling resistance.

The cap layer 50 in the first tread 60 is thick. As described above, the first tread 60 is located on the equator plane CL. The first tread 60 can contribute to exhibiting wet performance in a crown portion.

The ground-contact length of the crown portion is longer than that of the shoulder portion, and the ground-contact area of the crown portion is wider than that of the shoulder portion. Even if the tread 4 becomes worn and the cap layer 50 in each second tread 62 disappears, the cap layer 50 in the first tread 60 can contribute to suppression of a decrease in wet performance.

The tire 2 can achieve reduction of rolling resistance while suppressing a decrease in wet performance.

As described above, the ratio (TC/TT) of the thickness TC of the cap layer 50 in the first tread 60 to the thickness TT of the tread 4 is not greater than 55%, and the ratio (TC/TT) of the thickness TC of the cap layer 50 in the second tread 62 to the thickness TT of the tread 4 is not greater than 25%. From the viewpoint of reduction of rolling resistance, it is preferable that the ratio (TC/TT) of the thickness TC of the cap layer 50 in the first tread 60 to the thickness TT of the tread 4 is not greater than 50%, and the ratio (TC/TT) of the thickness TC of the cap layer 50 in the second tread 62 to the thickness TT of the tread 4 is not greater than 20%.

As described above, the ratio (TC/TT) of the thickness TC of the cap layer 50 in the first tread 60 to the thickness TT of the tread 4 is not less than 35%, and the ratio (TC/TT) of the thickness TC of the cap layer 50 in the second tread 62 to the thickness TT of the tread 4 is not less than 5%. From the viewpoint of suppression of a decrease in wet performance, it is preferable that the ratio (TC/TT) of the thickness TC of the cap layer 50 in the first tread 60 to the thickness TT of the tread 4 is not less than 40%, and the ratio (TC/TT) of the thickness TC of the cap layer 50 in the second tread 62 to the thickness TT of the tread 4 is not less than 10%.

In the tire 2, a portion between the first tread 60 and each second tread 62 is also referred to as boundary portion 64. In the boundary portion 64, the thickness TC of the cap layer 50 is thicker than 25% and thinner than 35% of the thickness TT of the tread 4. The boundary portion 64 is a portion between the above-described position P35 and position P25.

In FIG. 4, a position indicated by each reference character P30 is a position at which the thickness TC of the cap layer 50 is 30% of the thickness TT of the tread 4. Each solid line LB is a straight line that passes through the position P30 and extends in the radial direction. In the present invention, the straight line LB is also referred to as reference boundary line. The reference boundary line LB is located between the position P35 and the position P25 in the axial direction.

As shown in FIG. 4, the first tread 60 is located between the two reference boundary lines LB. Each second tread 62 is located axially outward of the reference boundary line LB. Each reference boundary line LB is located between the first tread 60 and the second tread 62.

In FIG. 3, a length indicated by a double-headed arrow HTW is the half width of the tread 4. The half width HTW of the tread 4 is the distance in the axial direction from the equator plane CL to the reference end TE of the tread 4. The half width HTW of the tread 4 is equal to half the above-described width TW of the tread 4.

A length indicated by a double-headed arrow HBW is the distance in the axial direction from the equator plane CL to the reference boundary line LB.

In the tire 2, the ratio (HBW/HTW) of the distance HBW in the axial direction to the half width HTW of the tread 4 is preferably not less than 70% and not greater than 90%.

When the ratio (HBW/HTW) is set to be not less than 70%, the first tread 60 can effectively contribute to suppression of a decrease in wet performance. From this viewpoint, the ratio (HBW/HTW) is more preferably not less than 75%.

When the ratio (HBW/HTW) is set to be not greater than 90%, the second tread 62 can effectively contribute to reduction of rolling resistance. From this viewpoint, the ratio (HBW/HTW) is more preferably not greater than 85%.

As shown in FIG. 3, in the tire 2, each reference boundary line LB is located axially outward of the shoulder circumferential groove 24s. Accordingly, the first tread 60 can effectively contribute to suppression of a decrease in wet performance, and each second tread 62 can effectively contribute to reduction of rolling resistance. The tire 2 can achieve reduction of rolling resistance while suppressing a decrease in wet performance. From this viewpoint, it is preferable that each reference boundary line LB is located axially outward of the shoulder circumferential groove 24s.

In the tire 2, each position P35 at which the thickness TC of the cap layer 50 is 35% of the thickness TT of the tread 4 is located axially outward of the shoulder circumferential groove 24s. Accordingly, the first tread 60 can effectively contribute to suppression of a decrease in wet performance, and each second tread 62 can effectively contribute to reduction of rolling resistance. The tire 2 can achieve reduction of rolling resistance while suppressing a decrease in wet performance. From this viewpoint, it is preferable that each position P35 at which the thickness TC of the cap layer 50 is 35% of the thickness TT of the tread 4 is located axially outward of the shoulder circumferential groove 24s.

In FIG. 3, a length indicated by a double-headed arrow WB is the distance in the axial direction from the position P35 at which the thickness TC of the cap layer 50 is 35% of the thickness TT of the tread 4 to the position P25 at which the thickness TC of the cap layer 50 is 25% of the thickness TT of the tread 4. The distance WB in the axial direction is the width of the boundary portion 64.

In the tire 2, from the viewpoint of being able to control suppression of a decrease in wet performance and reduction of rolling resistance in a well-balanced manner, the ratio (WB/HTW) of the width WB of the boundary portion 64 to the half width HTW of the tread 4 is preferably not greater than 5.0%, more preferably not greater than 4.0%, and further preferably not greater than 3.0%. From the viewpoint of effectively suppressing concentration of strain on the interface between the cap layer 50 and the intermediate layer 52 in the boundary portion 64, the ratio (WB/HTW) is preferably not less than 1.0%, more preferably not less than 1.5%, and further preferably not less than 2.0%.

As described above, in the tire 2, the loss tangent LTm at 30°C of the intermediate layer 52 is lower than the loss tangent LTc at 30°C of the cap layer 50. Specifically, the ratio (LTm/LTc) of the loss tangent LTm at 30°C of the intermediate layer 52 to the loss tangent LTc at 30°C of the cap layer 50 is preferably not less than 60% and not greater than 80%.

When the ratio (LTm/LTc) is set to be not less than 60%, the intermediate layer 52 can ensure the required stiffness, and can effectively contribute to improvement of wet performance. From this viewpoint, the ratio (LTm/LTc) is more preferably not less than 65%.

When the ratio (LTm/LTc) is set to be not greater than 80%, the intermediate layer 52 can effectively contribute to reduction of rolling resistance. From this viewpoint, the ratio (LTm/LTc) is more preferably not greater than 75%.

The loss tangent LTc at 30°C of the cap layer 50 is preferably not less than 0.15. This is because the cap layer 50 can contribute to improvement of wet performance. From this viewpoint, the loss tangent LTc is more preferably not less than 0.16 and further preferably not less than 0.17. The cap layer 50 comes into contact with a road surface. From the viewpoint of improvement of wet performance, it is more preferable if the loss tangent LTc is higher. However, a higher loss tangent LTc leads to heat generation. There is a concern that the heated cap layer 50 may raise the temperature of the intermediate layer 52 more than expected. From the viewpoint of being able to stably keep the temperature state of the entirety of the tread 4 and maintain low rolling resistance, the loss tangent LTc at 30°C of the cap layer 50 is preferably not greater than 0.30, more preferably not greater than 0.28, and further preferably not greater than 0.27.

In the tire 2, from the viewpoint that the intermediate layer 52 effectively contributes to reduction of rolling resistance, the loss tangent LTm at 30°C of the intermediate layer 52 is preferably not greater than 0.15, more preferably not greater than 0.14, and further preferably not greater than 0.13. From the viewpoint that the intermediate layer 52 can ensure the required stiffness and can effectively contribute to improvement of wet performance, the loss tangent LTm at 30°C of the intermediate layer 52 is preferably not less than 0.10 and more preferably not less than 0.11.

As described above, in the tire 2, the loss tangent LTb at 30°C of the base layer 54 is lower than the loss tangent LTm at 30°C of the intermediate layer 52. Specifically, the loss tangent LTb at 30°C of the base layer 54 is preferably not greater than 0.10. This is because the base layer 54 effectively contributes to reduction of rolling resistance. From this viewpoint, the loss tangent LTb is more preferably not greater than 0.09. It is more preferable if the loss tangent LTb of the base layer 54 is lower, so that a preferable lower limit is not set.

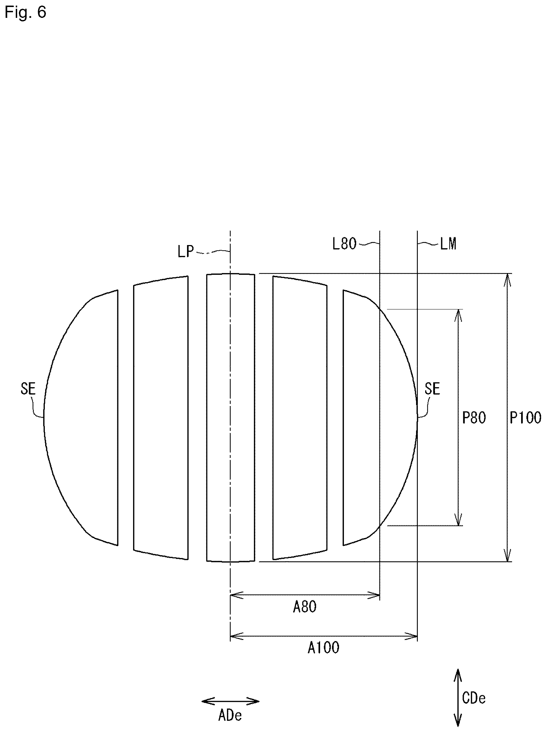

FIG. 6 schematically shows a ground-contact surface shape of the new tire 2. In FIG. 6, a direction indicated by a double-headed arrow ADe corresponds to the axial direction of the tire 2. A direction indicated by a double-headed arrow CDe corresponds to the circumferential direction of the tire 2.

A ground-contact surface is obtained, for example, using a ground-contact surface shape measuring device (not shown). The ground-contact surface is obtained when the tire 2 is fitted onto a rim (standardized rim), the internal pressure of the tire 2 is adjusted, a vertical load is applied to the tire 2, and the tire 2 is brought into contact with a flat road surface (flat surface) in this device.

Although not described in detail, an image of the ground-contact surface formed when the tire 2 comes into contact with the flat surface is obtained by a known method. The contour of the ground-contact surface is specified on the basis of the obtained image.

The contour of the ground-contact surface, that is, the ground-contact surface shape of the ground-contact surface, is obtained by tracing the perimeter of the ground-contact surface in the image of the ground-contact surface.

In the present invention, a ground-contact surface obtained when the tire 2 is fitted onto the standardized rim, the internal pressure of the tire 2 is adjusted to 230 kPa, a load that is 70% of a load indicated by the load index of the tire 2 is applied as a vertical load to the tire 2, and the tire 2 is brought into contact with a road surface composed of a flat surface, is a reference ground-contact surface. To obtain the reference ground-contact surface, the tire 2 is placed such that the axial direction thereof is parallel to the road surface. The above-described load is applied to the tire 2 in a direction perpendicular to the road surface. In other words, the vertical load is applied to the tire 2 in a state where the camber angle of the tire 2 is set to 0°.

In FIG. 6, an alternate long and short dash line LP is a center line of the width in the axial direction (i.e., the ground-contact width) of the reference ground-contact surface. A double-headed arrow P100 represents the length of a line of intersection of a plane including the straight line LP and the reference ground-contact surface. In the tire 2, the length P100 of this line of intersection is a ground-contact length at the center of the ground-contact width of the reference ground-contact surface.

In FIG. 6, a position indicated by each reference character SE is an axially outer end of the reference ground-contact surface, in other words, a ground-contact end of the reference ground-contact surface.

A solid line LM is a straight line that passes through the ground-contact end SE and is parallel to the straight line LP. A solid line L80 is a straight line that is located between the straight line LM and the straight line LP and is parallel to the straight line LM and the straight line LP. A double-headed arrow A100 represents the distance in the axial direction from the straight line LP to the straight line LM. The distance A100 is equivalent to half the ground-contact width of the reference ground-contact surface. A double-headed arrow A80 represents the distance in the axial direction from the straight line LP to the straight line L80. In FIG. 6, the ratio of the distance A80 to the distance A100 is set to 80%. That is, the straight line L80 indicates a position corresponding to 80% of the ground-contact width of the reference ground-contact surface. A double-headed arrow P80 represents the length of a line of intersection of a plane including the straight line L80 and the reference ground-contact surface. In the tire 2, the length P80 of this line of intersection is a ground-contact length at the position corresponding to 80% of the ground-contact width of the reference ground-contact surface.

By specifying the ground-contact length P100 at the center of the ground-contact width of the reference ground-contact surface and the ground-contact length P80 at the position corresponding to 80% of the ground-contact width of the reference ground-contact surface in the reference ground-contact surface shown in FIG. 6, the ratio (P80/P100) of the ground-contact length P80 to the ground-contact length P100 is obtained. The smaller the ratio (P80/P100) is, the more rounded the contour of the reference ground-contact surface is.

In the tire 2, the above-described ratio (P80/P100) is preferably not less than 65% and not greater than 95%.

When the ratio (P80/P100) is set to be not less than 65%, the shoulder portion can come into sufficient contact with a road surface. Slippage of the shoulder portion on the road surface is suppressed, so that the tire 2 can maintain good uneven wear resistance. From this viewpoint, the ratio (P80/P100) is more preferably not less than 70% and further preferably not less than 75%.

When the ratio (P80/P100) is set to be not greater than 95%, a ground-contact surface in which the ground-contact length of the crown portion is longer than that of each shoulder portion and the ground-contact area of the crown portion is wider than that of each shoulder portion, is formed. Even if the tread 4 becomes worn and the cap layer 50 in each second tread 62 disappears, the cap layer 50 in the first tread 60 can effectively contribute to suppression of a decrease in wet performance. From this viewpoint, the ratio (P80/P100) is more preferably not greater than 90% and further preferably not greater than 85%.

In FIG. 3, a solid line LS is a straight line that passes through the end of the outer belt ply 42 and extends in the radial direction. A position indicated by reference character SBE is the point of intersection of the straight line LS and the outer surface 2G of the tire 2 (specifically, the tread surface 20). The point of intersection SBE is a position on the tread surface 20 corresponding to the end of the outer belt ply 42. A solid line NL is a normal line of the outer surface 2G of the tire 2 that passes through the point of intersection SBE. A length indicated by a double-headed arrow TTe is the thickness of the tread 4 measured along the normal line NL. A length indicated by a double-headed arrow TCe is the thickness of the cap layer 50 measured along the normal line NL.

In the tire 2, the thickness TTe is the thickness of the tread 4 at the end of the outer belt ply 42, and the thickness TCe is the thickness of the cap layer 50 at the end of the outer belt ply 42.

In the tire 2, the thickness TCe of the cap layer 50 at the end of the outer belt ply 42 is preferably not greater than 25% of the thickness TTe of the tread 4. Accordingly, in the tire 2, the cap layer 50 can be thin and the intermediate layer 52 can be thick in the shoulder portion. The tire 2 can achieve reduction of rolling resistance. From this viewpoint, the thickness TCe of the cap layer 50 at the end of the outer belt ply 42 is more preferably not greater than 10% of the thickness TTe of the tread 4. Particularly preferably, the thickness TCe of the cap layer 50 at the end of the outer belt ply 42 is 5% of the thickness TTe of the tread 4.

In FIG. 3, a length indicated by a double-headed arrow WSBE is the distance in the axial direction from the end of the outer belt ply 42 to the reference boundary line LB.

In the tire 2, the distance WSBE in the axial direction is preferably 50 mm. As described above, the first tread 60 is located axially inward of the reference boundary line LB. Therefore, when the distance WSBE in the axial direction is set to 50 mm, the tread 4 is formed such that the thickness TC of the cap layer 50 is not less than 35% of the thickness TT of the tread 4 on the axially inner side with respect to a position away from the end of the outer belt ply 42 by 50 mm in the axial direction.

In the tire 2, the crown portion including the first tread 60 can effectively contribute to exhibiting wet performance. The tire 2 can effectively suppress a decrease in wet performance.

From the viewpoint of being able to achieve reduction of rolling resistance while suppressing a decrease in wet performance, it is more preferable that the thickness TCe of the cap layer 50 at the end of the outer belt ply 42 is not greater than 25% of the thickness TTe of the tread 4, and the thickness TC of the cap layer 50 is not less than 35% of the thickness TT of the tread 4 on the axially inner side with respect to the position away from the end of the outer belt ply 42 by 50 mm in the axial direction.

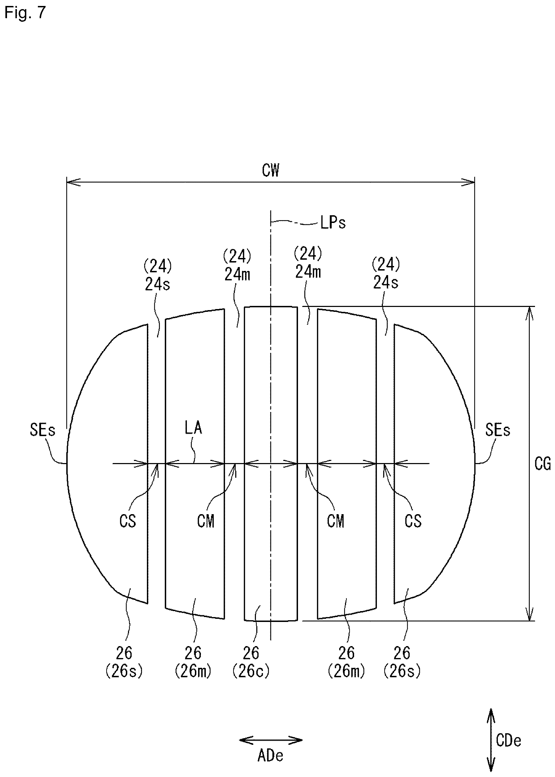

FIG. 7 shows a standard ground-contact surface of the new tire 2. Similar to the above-described reference ground-contact surface, the standard ground-contact surface is also obtained using a ground-contact surface shape measuring device (not shown). In particular, the standard ground-contact surface is a ground-contact surface obtained when the tire 2 is fitted onto the rim R, the internal pressure of the tire 2 is adjusted to 230 kPa, a vertical load is applied to the tire 2, and the tire 2 is brought into contact with a road surface composed of a flat surface. The vertical load applied to the tire 2 is not less than 60% and not greater than 80% of the load indicated by the load index of the tire 2.

In FIG. 7, a position indicated by each reference character SEs is a ground-contact end of the standard ground-contact surface. A length indicated by a double-headed arrow CW is the ground-contact width of the standard ground-contact surface. The ground-contact width CW is represented as the distance in the axial direction from one ground-contact end SEs to the other ground-contact end SEs. An alternate long and short dash line LPs is a ground-contact width center line of the standard ground-contact surface. A length indicated by a double-headed arrow CG is the ground-contact length at the ground-contact width center of the standard ground-contact surface.

In the tire 2, the ground-contact width CW of the standard ground-contact surface is preferably not less than 70% and not greater than 80% of the cross-sectional width AW of the tire 2. Accordingly, the tire 2 can come into contact with a road surface over a sufficiently wide area. The tire 2 can exhibit good wet performance.

As shown in FIG. 7, the standard ground-contact surface includes a ground-contact surface corresponding to each land portion 26, specifically, ground-contact surfaces of the center land portion 26c, the two middle land portions 26m, and the two shoulder land portions 26s. The space between the ground-contact surfaces corresponding to two adjacent land portions 26 corresponds to the circumferential groove 24. Therefore, the standard ground-contact surface includes the plurality of circumferential grooves 24, specifically, the two middle circumferential grooves 24m and the two shoulder circumferential grooves 24s.

In FIG. 7, each double-headed arrow CM indicates the groove width of the middle circumferential groove 24m in the standard ground-contact surface. Each double-headed arrow CS indicates the groove width of the shoulder circumferential groove 24s in the standard ground-contact surface.

A solid line LA is a straight line that passes through the center of the ground-contact length CG and extends in the axial direction. The groove width CM and the groove width CS are measured along the straight line LA.

In the tire 2, the sum of the groove widths of the plurality of circumferential grooves 24 included in the standard ground-contact surface, that is, the sum of the groove widths CM of the two middle circumferential grooves 24m and the groove widths CS of the two shoulder circumferential grooves 24s included in the standard ground-contact surface, is adjusted. Specifically, the ratio (AT/CW) of the sum AT of the groove widths of the plurality of circumferential grooves 24 included in the standard ground-contact surface to the ground-contact width CW of the standard ground-contact surface is preferably not less than 20% and not greater than 30%. Accordingly, the tire 2 can suppress occurrence of mild hydroplaning due to a decrease in groove volume by wear of the tread 4. From this viewpoint, the ratio (AT/CW) is more preferably not less than 22% and not greater than 28%.

From the viewpoint of being able to achieve reduction of rolling resistance while suppressing a decrease in wet performance, it is more preferable that the ground-contact width CW of the standard ground-contact surface is not less than 70% and not greater than 80% of the cross-sectional width AW of the tire 2, and the ratio (AT/CW) of the sum AT of the groove widths of the plurality of circumferential grooves 24 included in the standard ground-contact surface to the ground-contact width CW of the standard ground-contact surface is not less than 20% and not greater than 30%.

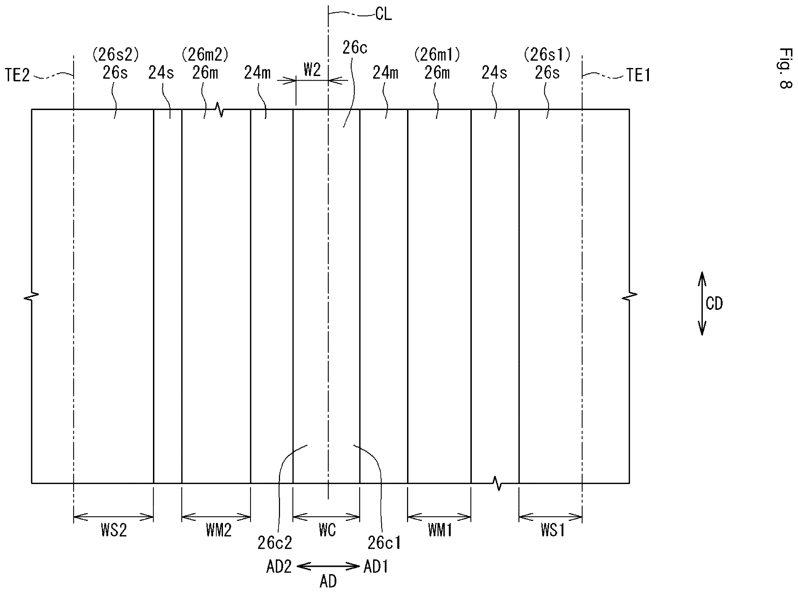

FIG. 8 shows a modification of the tread pattern. In FIG. 8 as well, as in FIG. 2, for convenience of description, only the four circumferential grooves 24 are shown as the grooves 22 which form the tread pattern.

In this tread pattern, the four circumferential grooves 24 are arranged asymmetrically with respect to the equator plane CL. Therefore, the five land portions 26 are also arranged asymmetrically with respect to the equator plane CL.

In the tread pattern shown in FIG. 8, the width WC of the center land portion 26c is preferably not less than 14% and not greater than 16% of the ground-contact width CW of the standard ground-contact surface.

When the width WC is set to be not less than 14% of the ground-contact width CW, a high cornering force is generated at each front tire when the tire 2 is mounted on a vehicle. The tire 2 can contribute to suppression of a response delay of the front tire.

When the width WC is set to be not greater than 16% of the ground-contact width CW, a high cornering force is generated in a well-balanced manner at each front tire and each rear tire when the tire 2 is mounted on a vehicle. The tire 2 can contribute to improvement of linearity.

In the tread pattern shown in FIG. 8, in the tire 2, a middle land portion 26m1 on the first reference end TE1 side (hereinafter referred to as first middle land portion 26m1) has a width WM1 substantially equal to a width WS1 of a shoulder land portion 26s1 on the first reference end TE1 side (hereinafter referred to as first shoulder land portion 26s1). The center land portion 26c has a width WC substantially equal to the width WM1 of the first middle land portion 26m1, or has a width WC wider than the width WM1. A middle land portion 26m2 on the second reference end TE2 side (hereinafter referred to as second middle land portion 26m2) has a width WM2 substantially equal to the width WC of the center land portion 26c, or has a width WM2 wider than the width WC. A shoulder land portion 26s2 on the second reference end TE2 side (hereinafter referred to as second shoulder land portion 26s2) has a width WS2 wider than the width WM2 of the second middle land portion 26m2.

This tread pattern can contribute to improvement of wet performance. Furthermore, the tire 2 can increase a cornering force. When the tire 2 is mounted on a vehicle, a response delay of each front tire is suppressed, and linearity is improved. The tire 2 can enhance the steering stability of the vehicle.

The width WS1 of the first shoulder land portion 26s1 is preferably not less than 90% and not greater than 100% of the width WC of the center land portion 26c.

When the width WS1 is set to be not less than 90% of the width WC, the center land portion 26c, the first middle land portion 26m1, and the second middle land portion 26m2 can be formed with appropriate widths in the tire 2. When the tire 2 is mounted on a vehicle, a high cornering force is generated in a well-balanced manner at each front tire and each rear tire, so that linearity is improved.

When the width WS 1 is set to be not greater than 100% of the width WC, the center land portion 26c, the first middle land portion 26m1, and the second middle land portion 26m2 can be formed with appropriate widths in the tire 2. When the tire 2 is mounted on a vehicle, a high cornering force is generated at each front tire, so that a response delay of the front tire is suppressed.

The width WM1 of the first middle land portion 26m1 is preferably not less than 90% and not greater than 100% of the width WC of the center land portion 26c.

When the width WM1 is set to be not less than 90% of the width WC, a high cornering force is generated at each front tire when the tire 2 is mounted on a vehicle. The tire 2 can contribute to suppression of a response delay of the front tire.

When the width WM1 is set to be not greater than 100% of the width WC, a high cornering force is generated in a well-balanced manner at each front tire and each rear tire when the tire 2 is mounted on a vehicle. The tire 2 can contribute to improvement of linearity.

The width WM2 of the second middle land portion 26m2 is preferably not less than 97% and not greater than 107% of the width WC of the center land portion 26c.

When the width WM2 is set to be not less than 97% of the width WC, a high cornering force is generated at each front tire when the tire 2 is mounted on a vehicle. The tire 2 can contribute to suppression of a response delay of the front tire.

When the width WM2 is set to be not greater than 107% of the width WC, a high cornering force is generated in a well-balanced manner at each front tire and each rear tire when the tire 2 is mounted on a vehicle. The tire 2 can contribute to improvement of linearity.

The width WS2 of the second shoulder land portion 26s2 is preferably not less than 114% and not greater than 124% of the width WC of the center land portion 26c.

When the width WS2 is set to be not less than 114% of the width WC, the center land portion 26c, the first middle land portion 26m1, and the second middle land portion 26m2 can be formed with appropriate widths in the tire 2. When the tire 2 is mounted on a vehicle, a high cornering force is generated in a well-balanced manner at each front tire and each rear tire, so that linearity is improved.

When the width WS2 is set to be not greater than 124% of the width WC, the center land portion 26c, the first middle land portion 26m1, and the second middle land portion 26m2 can be formed with appropriate widths in the tire 2. When the tire 2 is mounted on a vehicle, a high cornering force is generated at each front tire, so that a response delay of the front tire is suppressed.

In the center land portion 26c shown in FIG. 8, the width center thereof is located on the second reference end TE2 side with respect to the equator plane CL. That is, when the center land portion 26c is divided into a first portion 26c1 on the first reference end TE1 side and a second portion 26c2 on the second reference end TE2 side by the equator plane CL, the width of the second portion 26c2 is wider than the width of the first portion 26c 1. Accordingly, the tire 2 can increase a cornering force. When the tire 2 is mounted on a passenger car, a response delay of each front tire is suppressed, and linearity is improved. Steering stability is enhanced, so that the tire 2 can improve wet performance.

In FIG. 8, a double-headed arrow W2 indicates the width of the second portion 26c2. The width W2 is represented as the distance in the axial direction from the equator plane CL to the edge on the second reference end TE2 side of the center land portion 26c.

From the viewpoint of being able to suppress a response delay of each front tire and being able to improve linearity, the ratio (W2/WC) of the width W2 of the second portion 26c2 to the width WC of the center land portion 26c is preferably not less than 51% and not greater than 55%.

From the viewpoint that the responsiveness of each front tire and linearity can be effectively improved when the tire 2 is mounted on a vehicle and that the tire 2 can effectively contribute to suppression of a decrease in wet performance and reduction of rolling resistance, in the case where the tread pattern of the tire 2 includes four circumferential grooves 24 and five land portions 26 are formed in the tread 4, it is preferable that the width WC of the center land portion 26c is not less than 14% and not greater than 16% of the ground-contact width CW of the standard ground-contact surface. In this case, it is more preferable that the width WS1 of the shoulder land portion 26s1 on the first reference end TE1 side is not less than 90% and not greater than 100% of the width WC of the center land portion 26c, the width WM1 of the middle land portion 26m1 on the first reference end TE1 side is not less than 90% and not greater than 100% of the width WC of the center land portion 26c, the width WM2 of the middle land portion 26m2 on the second reference end TE2 side is not less than 97% and not greater than 107% of the width WC of the center land portion 26c, the width WS2 of the shoulder land portion 26s2 on the second reference end TE2 side is not less than 114% and not greater than 124% of the width WC of the center land portion 26c, and the ratio (W2/WC) of the width W2 of the second portion 26c2 of the center land portion 26c to the width WC of the center land portion 26c is not less than 51% and not greater than 55%. In particular, in the case where the ground-contact width CW of the standard ground-contact surface is not less than 70% and not greater than 80% of the cross-sectional width AW of the tire 2 and the ratio (AT/CW) of the sum AT of the groove widths of the plurality of circumferential grooves 24 included in the standard ground-contact surface to the ground-contact width CW of the standard ground-contact surface is not less than 20% and not greater than 30%, the tread pattern shown in FIG. 8 can effectively contribute to improvement of the responsiveness of each front tire and linearity when the tire 2 is mounted on a vehicle.

In the tire 2, the area of the intermediate layer 52 included in the inside tread 4u and the area of the intermediate layer 52 included in the outside tread 4s can be controlled by adjusting the thickness and the width of the intermediate layer 52. For example, by forming only the first reference end TE1 side of the tread 4 by the second tread 62 and forming the rest of the tread 4 by the first tread 60, the thickness of the intermediate layer 52 in the outside tread 4s can be made thinner than the thickness TM of the intermediate layer 52 in the second tread 62 of the outside tread 4s of the tread 4 shown in FIG. 4. In this case, in the tire 2, the area of the intermediate layer 52 included in the inside tread 4u can be larger than the area of the intermediate layer 52 included in the outside tread 4s.

By making the area of the intermediate layer 52 included in the inside tread 4u larger than the area of the intermediate layer 52 included in the outside tread 4s, the volume of the intermediate layer 52 included in the inside tread 4u can be set to be larger than the volume of the intermediate layer 52 included in the outside tread 4s in the tire 2. In this case, the inside tread 4u that generates less heat than the outside tread 4s is formed in the tread 4.

The shoulder portion on the inside tread 4u side of the tread 4 is more likely to experience larger compressive strain than the shoulder portion on the outside tread 4s side of the tread 4. Therefore, by forming the inside tread 4u that generates less heat than the outside tread 4s, the tire 2 can effectively suppress heat generation of the entire tread 4. The tire 2 can effectively reduce rolling resistance. From this viewpoint, it is preferable that, in the tire 2, the area of the intermediate layer 52 included in the inside tread 4u is larger than the area of the intermediate layer 52 included in the outside tread 4s.

As is obvious from the above description, according to the present invention, a tire that can achieve reduction of rolling resistance while suppressing a decrease in wet performance, is obtained.

EXAMPLES

Hereinafter, the present invention will be described in further detail by means of examples, etc., but the present invention is not limited to these examples.

[Example 1]

A tire (tire size = 255/50R20) having the basic structure shown in FIG. 1 and having specifications shown in Table 1 below was obtained.

The tread of Example 1 has three layers, that is, a cap layer, an intermediate layer, and a base layer, and has the configuration shown in FIG. 4.

[Comparative Example 1]

A tire of Comparative Example 1 was obtained in the same manner as Example 1, except that the tread was composed of two layers, that is, a cap layer and a base layer, and the thickness of each layer was adjusted such that the ratio of the thickness of the cap layer to the thickness of the tread and the ratio of the thickness of the base layer to the thickness of the tread were uniform as a whole. The tread of Comparative Example 1 is a conventional tread having a two-layer structure.

[Comparative Examples 2 to 4]

Tires of Comparative Examples 2 to 4 were obtained in the same manner as Example 1, except that the tread was composed of three layers, that is, a cap layer, an intermediate layer, and a base layer, and the thickness of each layer was adjusted such that the ratio of the thickness of the cap layer to the thickness of the tread, the ratio of the thickness of the intermediate layer to the thickness of the tread, and the ratio of the thickness of the base layer to the thickness of the tread were uniform as a whole. The treads of Comparative Examples 2 to 4 are conventional treads having a three-layer structure.

In Comparative Example 2, the ratio of the thickness of the cap layer to the thickness of the tread was set to 15%, the ratio of the thickness of the intermediate layer to the thickness of the tread was set to 65%, and the ratio of the thickness of the base layer to the thickness of the tread was set to 20%.

In Comparative Example 3, the ratio of the thickness of the cap layer to the thickness of the tread was set to 30%, the ratio of the thickness of the intermediate layer to the thickness of the tread was set to 50%, and the ratio of the thickness of the base layer to the thickness of the tread was set to 20%.

In Comparative Example 4, the ratio of the thickness of the cap layer to the thickness of the tread was set to 45%, the ratio of the thickness of the intermediate layer to the thickness of the tread was set to 35%, and the ratio of the thickness of the base layer to the thickness of the tread was set to 20%.

[Example 2]

A tire of Example 2 was obtained in the same manner as Example 1, except that the ratio (AT/CW), the ratio (WS2/WC), the ratio (WM2/WC), the ratio (WM1/WC), the ratio (WS1/WC), the ratio (W2/WC), and the ratio (WC/CW) were set as shown in Table 1 below.

[Rolling Resistance (RRC)]

Using a rolling resistance testing machine, a rolling resistance coefficient (RRC) was measured when a test tire ran on a drum at a speed of 80 km/h under the following conditions.

Rim width: 8.0 inches
Internal pressure: 250 kPa
Vertical load: 8.09 kN

A rolling resistance index was calculated on the basis of the following formula represented using a measured value RCa of the rolling resistance coefficient and a measured value RCb of the rolling resistance coefficient of Comparative Example 1. The results are shown in the cells for "RRC" in Table 1 below. The higher the value is, the lower the rolling resistance of the tire is.

$$\text{Rolling resistance index} = 100 + (\text{RCb} - \text{RCa})/\text{RCb} \times 100$$

[Wet Performance (New)]

New test tires were fitted onto rims (rim width = 8.0 inches) and inflated with air to adjust the internal pressures of the tires to 220 kPa. The tires were mounted to a test vehicle (SUV having an engine displacement of 2000 cc). The test vehicle was driven on a test course with a wet road surface (water film thickness = 1.4 mm). The test vehicle was braked in a state where the test vehicle was running at a speed of 100 km/h, and a running distance (braking distance) from a time when the vehicle was braked to a time when the vehicle stopped was measured. The results are shown in the cells for "WET (New)" in Table 1 below as indexes with the result of Comparative Example 1 being regarded as 100. The higher the value is, the shorter the braking distance is and the better the wet performance of the tire is.

[Wet Performance (After Wear)]

New test tires were fitted onto rims (rim width = 8.0 inches) and inflated with air to adjust the internal pressures of the tires to 220 kPa. The tires were mounted to a test vehicle (SUV having an engine displacement of 2000 cc). The test vehicle was driven on a test course with a dry asphalt road surface to wear the tread of each tire. The tread was worn until the groove depth of the circumferential groove reached 70% of the groove depth of the new tire. Then, the test vehicle was driven on a test course with a wet road surface (water film thickness = 1.4 mm). The test vehicle was braked in a state where the test vehicle was running at a speed of 100 km/h, and a running distance (braking distance) from a time when the vehicle was braked to a time when the vehicle stopped was measured. The results are shown in the cells for "WET (After wear)" in Table 1 below as indexes with the result of Comparative Example 1 being regarded as 100. The higher the value is, the shorter the braking distance is, and the tire can maintain good wet performance even after wear.

[Hydroplaning]

New test tires were fitted onto rims (rim width = 8.0 inches) and inflated with air to adjust the internal pressures of the tires to 220 kPa. The tires were mounted to a test vehicle (SUV having an engine displacement of 2000 cc). The test vehicle was driven on a test course with a wet road surface (water film thickness = 1.4 mm), and the speed at which hydroplaning occurred was measured. The results are shown in the cells for "Hydroplaning" in Table 1 below as indexes with the result of Comparative Example 1 being regarded as 100. The higher the value is, the better the hydroplaning resistance of the tire is.

[Running Test]

Test tires were fitted onto rims (rim width = 8.0 inches) and inflated with air to adjust the internal pressures of the tires to 250 kPa. The tires were mounted to a test vehicle (SUV having an engine displacement of 2000 cc). The test vehicle was driven on a test course with a dry road surface, and sensory evaluation was performed for responsiveness and linearity. The results are shown in the cells for "Responsiveness" and "Linearity" in Table 1 below as indexes with the result of Comparative Example 1 being regarded as 100. The higher the value is, the better the responsiveness or linearity of the tire is.

[Quietness (Pattern Noise: P/N)]

Test tires were fitted onto rims (rim width = 8.0 inches) and inflated with air to adjust the internal pressures of the tires to 220 kPa. The tires were mounted to a test vehicle (SUV having an engine displacement of 2000 cc). Sensory evaluation was performed for whooshing noise when the test vehicle was driven at 100 km/h on a test course with a dry road surface. The results are shown in the cells for "P/N" in Table 1 below as indexes with the result of Comparative Example 1 being regarded as 100. The higher the value is, the better the result is.

[Combined Performance]

The total of the index values obtained in the respective evaluations was calculated. The results are shown in the cells for "Combined" in Table 1 below. The higher the value is, the better the performance is.

[Table 1]

| | | Comp. Ex. 1 | Comp. Ex. 2 | Comp. Ex. 3 | Comp. Ex. 4 | Ex. 1 | Ex. 2 |
|---|---|---|---|---|---|---|---|
| Tread | Number of layers | 2 | 3 | 3 | 3 | 3 | 3 |
| | Configuration | - | - | - | - | FIG. 4 | FIG. 4 |
| HBW/HTW [%] | | - | - | - | - | 80 | 80 |
| Second tread | RC2 [%] | 80 | 15 | 30 | 45 | 15 | 15 |
| | RB2 [%] | 20 | 20 | 20 | 20 | 20 | 20 |
| First tread | RC1 [%] | 80 | 15 | 30 | 45 | 45 | 45 |
| | RB 1 [%] | 20 | 20 | 20 | 20 | 20 | 20 |
| LTm/LTc [%] | | 70 | 70 | 70 | 70 | 70 | 70 |
| P80/P100 [%] | | 75 | 75 | 75 | 75 | 75 | 75 |
| AT/CW [%] | | 23 | 23 | 23 | 23 | 23 | 25 |
| WS2/WC [%] | | 140 | 140 | 140 | 140 | 140 | 119 |
| WM2/WC [%] | | 125 | 125 | 125 | 125 | 125 | 102 |

(continued)

| | Comp. Ex. 1 | Comp. Ex. 2 | Comp. Ex. 3 | Comp. Ex. 4 | Ex. 1 | Ex. 2 |
|---|---|---|---|---|---|---|
| WM1/WC [%] | 125 | 125 | 125 | 125 | 125 | 95 |
| WS1/WC [%] | 140 | 140 | 140 | 140 | 140 | 95 |
| W2/WC [%] | 50 | 50 | 50 | 50 | 50 | 53 |
| WC/CW [%] | 12.2 | 12.2 | 12.2 | 12.2 | 12.2 | 14.7 |
| RRC | 100 | 104 | 104 | 103 | 104 | 104 |
| WET — New | 100 | 100 | 100 | 100 | 100 | 100 |
| WET — After wear | 100 | 85 | 85 | 100 | 100 | 100 |
| Hydroplaning | 100 | 100 | - | 100 | - | 104 |
| Responsiveness | 100 | 100 | - | 100 | - | 112 |
| Linearity | 100 | 100 | - | 100 | - | 109 |
| PIN | 100 | 100 | - | 100 | - | 98 |
| Combined | 700 | 689 | - | 703 | - | 727 |

As shown in Table 1, it is confirmed that in each Example, reduction of rolling resistance can be achieved while suppressing a decrease in wet performance. From the evaluation results, advantages of the present invention are clear.

The above-described technology capable of reducing rolling resistance while suppressing a decrease in wet performance can be applied to various tires.

[Additional Note]

The present invention includes the following aspects.

[1] A tire including a pair of beads, a carcass extending on and between the pair of beads, a tread located radially outward of the carcass and configured to come into contact with a road surface, and a belt located between the carcass and the tread, wherein: the tread includes a plurality of layers aligned in a radial direction; the plurality of layers include a cap layer located on an outermost side, a base layer located on an innermost side, and an intermediate layer located between the cap layer and the base layer; a loss tangent at 30°C of the intermediate layer is lower than a loss tangent at 30°C of the cap layer; a loss tangent at 30°C of the base layer is lower than the loss tangent at 30°C of the intermediate layer; the tread includes a first tread located on an equator plane and a second tread located axially outward of the first tread; a ratio of a thickness of the cap layer in the second tread to a thickness of the tread is not less than 5% and not greater than 25%; and a ratio of the thickness of the cap layer in the first tread to the thickness of the tread is not less than 35% and not greater than 55%.

[2] The tire according to [1] above, wherein a ratio of the loss tangent of the intermediate layer to the loss tangent of the cap layer is not less than 60% and not greater than 80%.

[3] The tire according to [1] or [2] above, wherein a ground-contact surface obtained when the tire is fitted onto a standardized rim, an internal pressure of the tire is adjusted to 230 kPa, a load that is 70% of a load indicated by a load index of the tire is applied as a vertical load to the tire, and the tire is brought into contact with a road surface composed of a flat surface, is a reference ground-contact surface, and a ratio of a ground-contact length at a position corresponding to 80% of a ground-contact width of the reference ground-contact surface to a ground-contact length at a ground-contact width center of the reference ground-contact surface is not less than 65% and not greater than 95%.

[4] The tire according to any one of [1] to [3] above, wherein the tread includes the first tread and a pair of the second treads located axially outward of the first tread.

[5] The tire according to any one of [1] to [4] above, wherein: a position on an outer surface of the tread corresponding to each end of the belt is a reference end; of the two reference ends, one reference end located on an inner side in a width direction of a vehicle when the tire is mounted on the vehicle is a first reference end, and another reference end is a second reference end; in a meridian cross-section of the tire, the first reference end side of the tread with respect to the equator plane of the tire is an inside tread, and the second reference end side of the tread with respect to the equator plane of the tire is an outside tread; and an area of the intermediate layer included in the inside tread is larger than the area of the intermediate layer included in the outside tread.

[6] The tire according to any one of [1] to [5] above, wherein the belt includes a plurality of belt plies aligned in the radial direction, the plurality of belt plies include an outer belt ply located on the outermost side, the thickness of the cap layer at an end of the outer belt ply is not greater than 25% of the thickness of the tread, and the thickness of the cap layer is not less than 35% of the thickness of the tread on an axially inner side with respect to a position away from the end of the outer belt ply by 50 mm in an axial direction.

[7] The tire according to any one of [1] to [6] above, wherein: the tread has a tread pattern including a plurality of circumferential grooves; a ground-contact surface obtained when the tire is fitted onto the standardized rim, the internal pressure of the tire is adjusted to 230 kPa, a vertical load is applied to the tire, and the tire is brought into contact with a road surface composed of a flat surface, is a standard ground-contact surface; the vertical load applied to the tire is not less than 60% and not greater than 80% of the load indicated by the load index of the tire; a ground-contact width of the standard ground-contact surface is not less than 70% and not greater than 80% of a cross-sectional width of the tire; and a ratio of a sum of groove widths of the plurality of circumferential grooves included in the standard ground-contact surface to the ground-contact width of the standard ground-contact surface is not less than 20% and not greater than 30%.

[8] The tire according to [7] above, wherein: a position on the outer surface of the tread corresponding to each end of the belt is a reference end; of the two reference ends, one reference end located on an inner side in a width direction of a vehicle when the tire is mounted on the vehicle is a first reference end, and another reference end is a second reference end; the tread pattern includes four circumferential grooves; five land portions are formed in the tread; the five land portions are a center land portion located on the equator plane, a pair of middle land portions located axially outward of the center land portion, and a pair of shoulder land portions located axially outward of the middle land portions; a width of the shoulder land portion on the first reference end side is not less than 90% and not greater than 100% of a width of the center land portion; a width of the middle land portion on the first reference end side is not less than 90% and not greater than 100% of the width of the center land portion; a width of the middle land portion on the second reference end side is not less than 97% and not greater than 107% of the width of the center land portion; a width of the shoulder land portion on the second reference end side is not less than 114% and not greater than 124% of the width of the center land portion; and when the center land portion is divided into a first portion on the first reference end side and a second portion on the second reference end side by the equator plane, a ratio of a width of the second portion to the width of the center land portion is not less than 51% and not greater than 55%.

**Claims**

1. A tire (2) comprising a pair of beads (10), a carcass (12) extending on and between the pair of beads (10), a tread (4) located radially outward of the carcass (12) and configured to come into contact with a road surface, and a belt (14) located between the carcass (12) and the tread (4), wherein

   the tread (4) includes a plurality of layers (48) aligned in a radial direction,
   the plurality of layers (48) include a cap layer (50) located on an outermost side, a base layer (54) located on an innermost side, and an intermediate layer (52) located between the cap layer (50) and the base layer (54),
   a loss tangent (LTm) at 30°C of the intermediate layer (52) is lower than a loss tangent (LTc) at 30°C of the cap layer (50),
   a loss tangent (LTb) at 30°C of the base layer (54) is lower than the loss tangent (LTm) at 30°C of the intermediate layer (52),
   the tread (4) includes a first tread (60) located on an equator plane (CL) and a second tread (62) located axially outward of the first tread (60),
   a ratio (TC/TT) of a thickness (TC) of the cap layer (50) in the second tread (62) to a thickness (TT) of the tread (4) is not less than 5% and not greater than 25%, and
   a ratio (TC/TT) of the thickness (TC) of the cap layer (50) in the first tread (60) to the thickness (TT) of the tread (4) is not less than 35% and not greater than 55%.

2. The tire (2) according to claim 1, wherein a ratio (LTm/LTc) of the loss tangent (LTm) of the intermediate layer (52) to the loss tangent (LTc) of the cap layer (50) is not less than 60% and not greater than 80%.

3. The tire (2) according to claim 1 or 2, wherein

   a ground-contact surface obtained when the tire (2) is fitted onto a standardized rim (R), an internal pressure of the tire (2) is adjusted to 230 kPa, a load that is 70% of a load indicated by a load index of the tire (2) is applied as a vertical load to the tire (2), and the tire (2) is brought into contact with a road surface composed of a flat surface, is a reference ground-contact surface, and

a ratio (P80/P100) of a ground-contact length (P80) at a position corresponding to 80% of a ground-contact width of the reference ground-contact surface to a ground-contact length (P100) at a ground-contact width center of the reference ground-contact surface is not less than 65% and not greater than 95%.

4. The tire (2) according to any one of claims 1 to 3, wherein the tread (4) includes the first tread (60) and a pair of the second treads (62) located axially outward of the first tread (60).

5. The tire (2) according to any one of claims 1 to 4, wherein

a position on an outer surface of the tread (4) corresponding to each end of the belt (14) is a reference end (TE), of the two reference ends (TE), one reference end (TE) located on an inner side in a width direction of a vehicle when the tire (2) is mounted on the vehicle is a first reference end (TE1), and another reference end (TE) is a second reference end (TE2),

in a meridian cross-section of the tire (2), the first reference end (TE1) side of the tread (4) with respect to the equator plane (CL) of the tire (2) is an inside tread (4u), and the second reference end (TE2) side of the tread (4) with respect to the equator plane (CL) of the tire (2) is an outside tread (4s), and

an area of the intermediate layer (52) included in the inside tread (4u) is larger than the area of the intermediate layer (52) included in the outside tread (4s).

6. The tire (2) according to any one of claims 1 to 5, wherein

the belt (14) includes a plurality of belt plies (38) aligned in the radial direction,

the plurality of belt plies (38) include an outer belt ply (42) located on the outermost side,

the thickness (TC) of the cap layer (50) at an end of the outer belt ply (42) is not greater than 25% of the thickness (TT) of the tread (4), and

the thickness (TC) of the cap layer (50) is not less than 35% of the thickness (TT) of the tread (4) on an axially inner side with respect to a position away from the end of the outer belt ply (42) by 50 mm in an axial direction.

7. The tire (2) according to any one of claims 1 to 6, wherein

the tread (4) has a tread pattern including a plurality of circumferential grooves (24),

a ground-contact surface obtained when the tire (2) is fitted onto the standardized rim (R), the internal pressure of the tire (2) is adjusted to 230 kPa, a vertical load is applied to the tire (2), and the tire (2) is brought into contact with a road surface composed of a flat surface, is a standard ground-contact surface,

the vertical load applied to the tire (2) is not less than 60% and not greater than 80% of the load indicated by the load index of the tire (2),

a ground-contact width (CW) of the standard ground-contact surface is not less than 70% and not greater than 80% of a cross-sectional width (AW) of the tire (2), and

a ratio (AT/CW) of a sum (AT) of groove widths of the plurality of circumferential grooves (24) included in the standard ground-contact surface to the ground-contact width (CW) of the standard ground-contact surface is not less than 20% and not greater than 30%.

8. The tire (2) according to claim 7, wherein

a position on the outer surface of the tread (4) corresponding to each end of the belt (14) is a reference end (TE), of the two reference ends (TE), one reference end (TE) located on an inner side in a width direction of a vehicle when the tire (2) is mounted on the vehicle is a first reference end (TE1), and another reference end (TE) is a second reference end (TE2),

the tread pattern includes four circumferential grooves (24),

five land portions (26) are formed in the tread (4),

the five land portions (26) are a center land portion (26c) located on the equator plane (CL), a pair of middle land portions (26m, 26m1, 26m2) located axially outward of the center land portion (26c), and a pair of shoulder land portions (26s, 26s1, 26s2) located axially outward of the middle land portions (26m, 26m1, 26m2),

a width (WS1) of the shoulder land portion (26s1) on the first reference end (TE1) side is not less than 90% and not greater than 100% of a width (WC) of the center land portion (26c),

a width (WM1) of the middle land portion (26m1) on the first reference end (TE1) side is not less than 90% and not greater than 100% of the width (WC) of the center land portion (26c),

a width (WM2) of the middle land portion (26m2) on the second reference end (TE2) side is not less than 97% and not greater than 107% of the width (WC) of the center land portion (26c),

a width (WS2) of the shoulder land portion (26s2) on the second reference end (TE2) side is not less than 114% and not greater than 124% of the width (WC) of the center land portion (26c), and

when the center land portion (26c) is divided into a first portion (26c1) on the first reference end (TE1) side and a second portion (26c2) on the second reference end (TE2) side by the equator plane (CL), a ratio (W2/WC) of a width (W2) of the second portion (26c2) to the width (WC) of the center land portion (26c) is not less than 51% and not greater than 55%.

Fig. 1

Fig. 2

Fig. 3

Fig. 4

Fig. 5

Fig. 6

Fig. 7

Fig. 8

## EP 4 574 459 A1

Europäisches
Patentamt

European
Patent Office

Office européen
des brevets

# EUROPEAN SEARCH REPORT

**Application Number**

EP 24 21 4377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 067 115 A1 (SUMITOMO RUBBER IND [JP]) 5 October 2022 (2022-10-05) * paragraphs [0073], [0095] - [0100], [0125], [0126]; claims 1, 3, 4; figures 1, 4 * | 1-8 | INV. B60C11/00 B60C11/03 |
| A | US 2022/203768 A1 (UNO HIROKI [JP]) 30 June 2022 (2022-06-30) * paragraphs [0094], [0115]; claims 1, 15; figures 1, 3, 6 * | 1-8 | |
| A | US 2022/203769 A1 (UNO HIROKI [JP]) 30 June 2022 (2022-06-30) * paragraph [0066]; claims 1, 4, 5, 8-10, 12, 15-19; figures 1, 3-7 * | 1-8 | |

| | |
|---|---|
| | TECHNICAL FIELDS SEARCHED (IPC) |
| | B60C |

The present search report has been drawn up for all claims

| Place of search | Date of completion of the search | Examiner |
|---|---|---|
| Munich | 7 April 2025 | Balázs, Matthias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 21 4377

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | | | Publication date | Patent family member(s) | | | Publication date |
|---|---|---|---|---|---|---|---|
| EP 4067115 | A1 | | 05-10-2022 | CN | 115139704 | A | 04-10-2022 |
| | | | | EP | 4067115 | A1 | 05-10-2022 |
| | | | | JP | 7596894 | B2 | 10-12-2024 |
| | | | | JP | 2022154242 | A | 13-10-2022 |
| US 2022203768 | A1 | | 30-06-2022 | CN | 114683772 | A | 01-07-2022 |
| | | | | EP | 4019280 | A1 | 29-06-2022 |
| | | | | JP | 7615676 | B2 | 17-01-2025 |
| | | | | JP | 2022103903 | A | 08-07-2022 |
| | | | | US | 2022203768 | A1 | 30-06-2022 |
| US 2022203769 | A1 | | 30-06-2022 | CN | 114683773 | A | 01-07-2022 |
| | | | | EP | 4019279 | A1 | 29-06-2022 |
| | | | | JP | 7639337 | B2 | 05-03-2025 |
| | | | | JP | 2022103813 | A | 08-07-2022 |
| | | | | US | 2022203769 | A1 | 30-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018002008 A